# EUROPEAN PATENT SPECIFICATION

(11) **EP 1 173 957 B1**
(45) Date of publication and mention of the grant of the patent: **21.01.2009**
(21) Application number: 00925736.1
(22) Date of filing: 01.05.2000
(51) Int. Cl.: H04L 12/56

(54) **RADIO NETWORK BASED ON SIMPLIFIED RADIO RELAYS**
AUF VEREINFACHTEN FUNKRELAIS BASIERENDES FUNKNETZWERK
RESEAU RADIO BASE SUR DES RELAIS RADIO SIMPLIFIES

(30) Priority: 29.04.1999 NL 1011944; 01.11.1999 NL 1013444
(43) Date of publication of application: 23.01.2002
(73) Proprietor: Nederhoed, Reinder Eric, 8531 RP Lemmer (NL)
(72) Inventor: Nederhoed, Reinder Eric, 8531 RP Lemmer (NL)
(74) Representative: 't Jong, Bastiaan Jacob
(86) International application number: PCT/NL2000/000283
(87) International publication number: WO 2000/067434

(56) References cited:
- EP-A- 0 851 632
- WO-A-95/16341
- DE-A- 4 224 422
- US-A- 5 610 595

## Description

The invention relates to a device for transferring information which comprises a number of node elements. Such a device can be designated a network.

Each of the node elements has its own address so that information intended for that node element and information originating from that node element can be identified as being associated with that node element.

Networks, particularly those used for transferring digital information between computers, are generally known. These typically comprise direct line connections and/or switched line connections over which the information is transferred. The information is sent along the line connections in accordance with a specified protocol so that each of the node elements can make use of the information.

The laying of line connections is generally quite a costly business, particularly when these line connections have to be arranged between separate buildings. The line connections must then generally be buried in the ground.

This drawback is obviated in the device according to the invention as characterized in claim 1. This network according to the invention operates radiographically so that physical connections between the node elements are not necessary. A data signal is transferred from the one node element to another until the node element is reached for which the data signal is intended. Such networks are known, see e.g. "Soldier Phone:an innovative approach to wireless multimedia communications", Military Communications Conference, 1998. MILCOM 98. Proceedings, IEEE pages 903-907 vol.3.

The characterising part of claim 1 prevents a data signal creating repetitive feedback in the device, whereby proper operation and rapid data transfer could be adversely affected. The data signal will spread through the network like the rings resulting from a stone, in water and be "quenched" at the edges of the network.

The device can be embodied such that a data signal is transmitted a number of times at intervals in order to ensure that it arrives at the intended destination. The measure of claim 3 is preferably applied herein. As soon as the node element from which the data signal originally comes receives the confirmation signal, repeated transmission of the original data signal can be stopped.

The original data signal sent by a node element is generated in the embodiment according to claim 4 by a data-generating device connected to the input/output member. The data-generating device thus provides the data which must be transferred to another location in the network. Using the radio transmitter the central processor unit then sends the data which is packaged in a particular protocol.

A node element can also comprise a data-processing device and data supplied via the network is then further processed by this data-processing unit.

The measure of claim 6 is preferably applied. The signal is hereby prevented from being able to run on, for instance as a consequence of a malfunction of one of the radio receivers.

The device according to the invention can be applied for mutual connection of a number of computers. A number of node elements can herein be applied which are used solely to pass on the data signal from one computer to another, particularly when the distance between the computers for mutual connection is greater than the range of any of the radio transmitters.

The radio receivers and radio transmitters suitably operate at a frequency and with a power such that no authorization is required therefor. A suitable frequency is therefore 433 mHz.

Instead of mutually connecting a number of computers, the network according to the invention can also be used in suitable manner to control the systems present in the vicinity from a central point at which a computer is arranged. These can be for instance indicator and alarm systems in factories and for instance homes for the elderly and nursing homes and culture systems in agriculture and horticulture.

Another suitable application is the control of systems in buildings, such as heating installations, lighting and the like. The device is applied particularly usefully here when these buildings are separate buildings such as for instance in bungalow parks. In this respect an application in glass horticulture can also be envisaged.

Another suitable application is as theft alarm system, wherein a number of individual objects have to be monitored. Yachts in a marina, transport containers at a storage depot and the like can be envisaged here. Each of the objects for monitoring, such as the yachts or the containers, is provided with a node element according to the invention, on the input/output member of which one or more alarm sensors are connected. The device can be embodied herein such that each of the node elements is periodically checked for proper operation in order to enable timely recognition of sabotage.

In systems wherein the device is used to control or monitor a number of separate buildings and/or objects, the central computer can also be used in mobile manner. As long as it is situated within the range of the radio transmitter of one or more of the node elements, data signals intended for this central computer and originating from this central computer will be processed correctly in the network. In the stated application for bungalow parks, the device can for instance be applied to monitor and control the installations in each of the bungalows. It is thus possible to monitor the proper operation of the central heating devices in each of the bungalows, but also to remotely switch them on and off and adjust the thermostat thereof. When the bungalow is not occupied, the thermostat can for instance be set remotely to a position at which freezing of pipes is prevented. It is also possible to set the thermostat to a comfortable value some time before the arrival of new guests, so that they arrive to find a pleasantly heated bungalow.

Mains power failure can for instance be detected in similar manner. Only one node element need generally be applied per bungalow. All desired information signals and controls can be performed via this node element.

The bungalows in a bungalow park are usually spaced such that it is possible to suffice with one node element per bungalow to ensure a good transmission through the network. In the case of greater distances additional node elements can be incorporated.

Another example of the present invention is the application in climate control in glass horticulture.

Within glass horticulture a system can be developed wherein, on the basis of diverse sensors (about 50 per hectare) in the glasshouse, a picture can be formed of the climatological situation in this glasshouse, such as determining the temperature, relative humidity, CO₂ and so on.

For a uniform growth of the crop it is particularly important to provide a very uniform climate through the glasshouse.

According to the invention the differences can be detected and corrected with a network of sensors over the whole area of the glasshouse. Sunblinds, heating equipment and sprinkler installations are for instance actuated subject to the detected differences.

The pattern of sensors can be sub-divided into sub-patterns which each co-act with a node element in accordance with the network system of the invention. It is further possible to group the sensors of the same type, for instance temperature, humidity and CO₂ sensors, which groups report to predetermined node elements, which data is transferred to the relevant computer.

The system according to the invention can be extended still further by applying remote mobile control elements or hand terminals which are carried by security or glasshouse personnel, which personnel can immediately report information relating to humidity or plant diseases. In this latter case the member of staff does not need to know his location in the glasshouse at that moment. The position determination can in any case take place with for instance the bar codes on the plants in order to obtain a more precise determination. A less precise position determination takes place as "cross-check", i.e. use is made of the high-frequency signal intensity generated by the hand terminal. This operates as follows:
When the signal from the hand terminal is received by a plurality of node elements, it is possible on the basis of the signal intensity to roughly determine the location at which the hand terminal is situated. The disease symptoms and the associated position determination reported by the hand terminal herein serve as reference data, for instance for a spraying machine for pesticides.

Other functions can be given to the hand terminals, for instance a timestamp, so that the activities performed by staff can be registered.

The manner in which the different sensors and control elements are connected to the input/output member of the node element and co-act therewith will be obvious to a skilled person in the field and requires no further explanation here.

## Claims

1. Network for transferring information, comprising a number of node elements which each have their own address and are provided with a central processor unit having coupled thereto a radio receiver, a radio transmitter and an input/output member, wherein the central processor unit is programmed such that it passes a data signal received by the radio receiver to the radio transmitter when an address associated with the data signal differs from the address of the node element, **characterized in that** the processor unit comprises a memory for temporary storage of the data signal and is further programmed such that it compares a received data signal with the stored data signal and, if they are identical, does not pass the received data signal for a determined time to the radio transmitter.

2. Network as claimed in claim 1, wherein the central processor unit is programmed such that it passes a data signal received by the radio receiver to the input/output member when an address associated with the data signal corresponds with the address of the node element.

3. Network as claimed in claim 2, wherein the central processor unit is programmed such that it generates a confirmation signal and passes it to the radio transmitter when an address associated with a received data signal corresponds with the address of the node element.

4. Network as claimed in any of the foregoing claims, wherein a node element comprising a data-processing device that is connected to the input/output member and the central processor unit is programmed such that in accordance with a determined protocol it addresses and formats data received via the input/output member of the data-generating device and passes it to the radio transmitter.

5. Network as claimed in claim 4, wherein the central processor unit is programmed such it deduces data from a data signal received from the radio receiver and passes it to the data-processing device.

6. Network as claimed in any of the foregoing claims, wherein the radio receivers of at least two other node elements are arranged within the range of each radio transmitter of a node element.

7. Network as claimed in any of the foregoing claims, wherein a control device such as a computer is connected to the input/output member.

8. Application of the network according to the invention as claimed in any of the foregoing claims in horticulture, in particular glass horticulture, wherein an area for monitoring is provided with a pattern of sensors that is sub-divided into sub-patterns which each co-act with a node element of the network according to any of the foregoing claims.

## Patentansprüche

1. Netzwerk zum Übertragen von Information, aufweisend: eine Anzahl von Knotenelementen, die jeweils ihre eigene Adresse aufweisen und mit einer zentralen Prozessoreinheit versehen sind, an die ein Funkempfänger, ein Funksender und ein Eingangs-/Ausgangs-Element gekoppelt sind, wobei die zentrale Prozessoreinheit so programmiert ist, dass sie ein Datensignal, das von dem Funkempfänger empfangen wird, an den Funksender weitergibt, wenn sich eine Adresse, die mit dem Datensignal verknüpft ist, von der Adresse des Knotenelements unterscheidet, **dadurch gekennzeichnet, dass** die Prozessoreinheit einen Speicher zum temporären Speichern des Datensignals aufweist und ferner so programmiert ist, dass sie ein empfangenes Datensignal mit dem gespeicherten Datensignal vergleicht, und wenn diese identisch sind, das empfangene Datensignal für eine bestimmte Zeit nicht an den Radiosender übermittelt.

2. Netzwerk gemäß Anspruch 1, wobei die zentrale Prozessoreinheit so programmiert ist, dass sie ein Datensignal, das von dem Radioempfänger empfangen wird, an das Eingabe- /Ausgabeelement übermittelt, wenn eine Adresse, die mit dem Datensignal verknüpft ist, der Adresse des Knotenelements entspricht.

3. Netzwerk gemäß Anspruch 2, wobei die zentrale Prozessoreinheit so programmiert ist, dass sie ein Bestätigungssignal generiert und es an den Funksender übermittelt, wenn eine Adresse, die mit einem empfangenen Datensignal verknüpft ist, der Adresse des Knotenelements entspricht.

4. Netzwerk gemäß einem der vorhergehenden Ansprüche, wobei ein Knotenelement, das eine Datenverarbeitungseinrichtung aufweist, die mit dem Eingangs-/ Ausgangselement und der zentralen Prozessoreinheit gekoppelt ist, so programmiert ist, dass es gemäß einem bestimmten Protokoll über das Eingangs-/ Ausgangselement der Datengenerierungseinrichtung empfangene Daten adressiert und formatiert und an den Funksender übermittelt.

5. Netzwerk gemäß Anspruch 4, wobei die zentrale Prozessoreinheit so programmiert ist, dass sie Daten aus einem Datensignal, das von einem Funkempfänger empfangen wird, ableitet und an die Datenverarbeitungseinrichtung übermittelt.

6. Netzwerk gemäß einem der vorhergehenden Ansprüche, wobei die Funkempfänger von mindestens zwei anderen Knotenelementen innerhalb der Reichweite von jedem Funksender eines Knotenelements angeordnet sind.

7. Netzwerk gemäß einem der vorhergehenden Ansprüche, wobei eine Steuereinrichtung, wie zum Beispiel ein Rechner, mit dem Eingangs- /Ausgangselement verbunden ist.

8. Anwendung des erfindungsgemäßen Netzwerks gemäß einem der vorhergehenden Ansprüche im Gartenbau, insbesondere im Gewächshausgartenbau, wobei ein Bereich zum Überwachen mit einem Muster von Sensoren vorgesehen ist, das in Teilmuster unterteilt ist, die jeweils mit einem Knotenelement des Netzwerks gemäß einem der vorhergehenden Ansprüche zusammenarbeiten.

## Revendications

1. Réseau pour transférer des informations, comprenant un nombre d'éléments de noeud qui possèdent chacun leur propre adresse et sont pourvus d'une unité centrale de traitement possédant, couplés à celle-ci, un récepteur radio, un transmetteur radio et un élément d'entrée/sortie, dans lequel l'unité centrale de traitement est programmée de sorte qu'elle passe un signal de données reçu par le récepteur radio au transmetteur radio lorsqu'une adresse associée au signal de données diffère de l'adresse de l'élément de noeud, **caractérisé en ce que** l'unité de traitement comprend une mémoire pour une mémorisation temporaire du signal de données et est en outre programmée de sorte qu'elle compare un signal de données reçu au signal de données mémorisé et, s'ils sont identiques, ne passe pas le signal de données reçu pendant un temps prédéterminé au transmetteur radio.

2. Réseau selon la revendication 1, dans lequel l'unité centrale de traitement est programmée de sorte qu'elle passe un signal de données reçu par le récepteur radio à l'élément d'entrée/sortie lorsqu'une adresse associée au signal de données correspond à l'adresse de l'élément de noeud.

3. Réseau selon la revendication 2, dans lequel l'unité centrale de traitement est programmée de sorte qu'elle génère un signal de confirmation et le passe au transmetteur radio lorsqu'une adresse associée à un signal de données reçu correspond à l'adresse de l'élément de noeud.

4. Réseau selon l'une quelconque des revendications précédentes, dans lequel au moins un dispositif de génération de données est connecté à l'élément d'entrée/sortie et l'unité centrale de traitement est programmée de sorte que, conformément à un protocole déterminé, elle adresse et formate des données reçues par l'intermédiaire de l'élément d'entrée/sortie du dispositif de génération de données et les passe au transmetteur radio.

5. Réseau selon la revendication 4, dans lequel l'unité centrale de traitement est programmée de sorte qu'elle déduise des données à partir d'un signal de données reçu à partir du récepteur radio et les passe au dispositif de traitement de données.

6. Réseau selon l'une quelconque des revendications précédentes, dans lequel les récepteurs radios d'au moins deux autres éléments de noeud sont agencés au sein de la portée de chaque transmetteur radio d'un élément de noeud.

7. Réseau selon l'une quelconque des revendications précédentes, dans lequel un dispositif de commande tel qu'un ordinateur est connecté à l'élément d'entrée/sortie.

8. Application du réseau selon l'invention selon l'une quelconque des revendications précédentes dans l'horticulture, en particulier horticulture de serre, dans laquelle une zone destinée à être surveillée est pourvue d'un ensemble de capteurs qui est sous-divisé en sous-ensembles qui chacun agissent conjointement à un élément de noeud du réseau selon l'une quelconque des revendications précédentes.
